# EUROPÄISCHE PATENTANMELDUNG

(11) **EP 2 180 574 A2**
(43) Veröffentlichungstag der Anmeldung: **28.04.2010**
(21) Anmeldenummer: 09013437.0
(22) Anmeldetag: 23.10.2009
(51) Int. Cl.: H02J 7/00

(54) **Batteriemanagementsystem für eine nach galvanischen Prinzipien arbeitende elektrische Einrichtung, beispielsweise eine Lithium-Ionen-Zelle**

(30) Priorität: 23.10.2008 DE 102008052986
(71) Anmelder: Li-Tec Battery GmbH, 01917 Kamenz (DE)
(72) Erfinder: Schäfer Tim, 99762 Niedersachswerfen (DE); Gutsch Andreas, 59348 Lüdinghausen (DE)
(74) Vertreter: Schlotter, Alexander Carolus Paul

(57) **Zusammenfassung**

Die Erfindung betrifft ein Batteriemanagementsystem (10) zum Überwachen und Steuern von mindestens einer nach galvanischen Prinzipien arbeitenden Einrichtung (14, 14'), insbesondere ein Lithium-lonen-Akkumulator mit mindestens einer Lithium-lonen-Zelle (14a, 14b, 14c...; 14a', 14b', 14c'...). Das System (10) umfasst: eine Zentralsteuereinrichtung (16), eine Programmspeichereinrichtung (18) in operativer Verbindung mit der Zentralsteuereinrichtung (16), mindestens eine Datenspeichereinrichtung (20) in operativer Verbindung mit der Zentralsteuereinrichtung (16), mindestens eine Sensorschnittstelleneinrichtung (22) operativ verbunden mit der Zentralsteuereinrichtung (16) zum Überwachen von Funktionsparametern von mindestens einer Lithium-Ionen-Zelle der nach galvanischen Prinzipien arbeitenden Einrichtung (14) und ausgebildet zum operativen Verbinden mit mindestens einer externen Sensoreinrichtung (26a, 26b, 26c,...) zum Messen von mindestens einem Funktionsparameter einer jeweiligen Lithium-lonen-Zelle, mindestens eine Einleseeinrichtung (44a, 44b, 44c...) in operativer Verbindung mit der Zentralsteuereinrichtung (16) und ausgebildet zum Einlesen von mindestens einem Betriebsparameter einer zugeordneten Lithium-lonen-Zelle (14a, 14b, 14c...; 14a', 14b', 14c'...). Erfindungsgemäß sind die Zentralsteuereinrichtung (16), die mindestens eine Programmspeichereinrichtung (18), die mindestens eine Datenspeichereinrichtung (20), die mindestens eine Sensorschnittstelleneinrichtung (22) und die mindestens eine Einleseeinrichtung (44a, 44b, 44c...) einem integrierten Schaltkreis (12) integriert.

## Beschreibung

Die vorliegende Erfindung betrifft ein Batteriemanagementsystem für eine nach galvanischen Prinzipien arbeitende Einrichtung, wie insbesondere eine Lithium-Ionen-Zelle bzw. ein Lithium-Ionen-Akkumulator.

Unter Batteriemanagementsystem wird eine Vorrichtung zur Erfassung von Betriebsdaten und zur Steuerung des Betriebs einer nach galvanischen Prinzipien arbeitenden Einrichtung, bzw. einer wiederaufladbaren Energiespeichereinrichtung, verstanden. Die Betriebsdaten umfassen beispielsweise den Zustand der Einrichtung, wie etwa den Ladezustand, die Kapazität, die Leistungsfähigkeit und die Restlebensdauer der Einrichtung. Zur Steuerung der Einrichtung gehören beispielsweise die Steuerung des Ladevorgangs, die Steuerung des Entladevorgangs und eine Steuerung zum Schutz vor Überlastung bzw. unzulässigen Betriebszuständen, wie etwa Tiefentladung oder Betrieb bei einer hohen Temperatur, beispielsweise oberhalb eines vorbestimmten Temperaturschwellwerts.

Auch wenn die Erfindung in Bezug auf den Einsatz in einem Kraftfahrzeug und die Steuerung dessen wiederaufladbarer Energiespeichereinrichtung zur Versorgung eines elektrischen Antriebs des Kraftfahrzeugs beschrieben wird, wird darauf hingewiesen, dass ein Batteriemanagementsystem mit den Merkmalen der Ansprüche auch unabhängig von Kraftfahrzeugen bzw. aus dem stationären Einsatz betrieben und benutzt werden kann.

Batteriemanagementsysteme für wiederaufladbare Energiespeichereinrichtungen bzw. nach galvanischen Prinzipien arbeitende Einrichtungen sind im Stand der Technik bekannt. Beispielsweise beschreibt die im Namen der Anmelderin der vorliegenden Anmeldung am 20. Februar 2008 eingereichte deutsche Patentanmeldung DE 10 2008 009 970 ein Batteriemanagementsystem für den Einsatz in Kraftfahrzeugen, das zentral zum Steuern von einer oder mehreren Energiespeichereinrichtungen und räumlich getrennt von diesen Einrichtungen vorgesehen ist.

Die Aufgabe der Erfindung besteht allgemein darin, die Einsatzmöglichkeiten eines Batteriemanagementsystems zu erweitern.

Die erfindungsgemäße Lösung dieser Aufgabe besteht darin, den Integrationsgrad des Batteriemanagementsystems zu maximieren, so dass es preiswert und kompakt hergestellt werden kann, und in der Folge in einer beliebigen nach galvanischen Prinzipien arbeitenden Einrichtung bzw. wiederaufladbaren Energiespeichereinrichtung wirtschaftlich rentabel und technisch bzw. räumlich problemlos integrierbar ist. Die Integration des Batteriemanagementsystems mit einer bestimmten, nach galvanischen Prinzipien arbeitenden Einrichtung ermöglicht, dass die betroffene Einrichtung mit einem hohen Wirkungsgrad betrieben werden und dass deren Lebensdauer durch geeigneten, insbesondere schonenden Betrieb verlängert werden kann.

Wie beansprucht, wird ein Batteriemanagementsystem bereitgestellt zum Überwachen und Steuern von mindestens einer nach galvanischen Prinzipien arbeitenden Einrichtung, insbesondere eines Lithium-Ionen-Akkumulators mit mindestens einer Lithium-Ionen-Zelle. Das System umfasst eine Zentralsteuereinrichtung, eine Programmspeichereinrichtung in operativer Verbindung mit der Zentralsteuereinrichtung, mindestens eine Datenspeichereinrichtung in operativer Verbindung mit der Zentralsteuereinrichtung, mindestens eine Sensorschnittstelleneinrichtung operativ verbunden mit der Zentralsteuereinrichtung zum Überwachen von Funktionsparametern von mindestens einer Lithium-Ionen-Zelle der nach galvanischen Prinzipien arbeitenden Einrichtung und ausgebildet zum operativen Verbinden mit mindestens einer externen Sensoreinrichtung zum Messen von mindestens einem Funktionsparameter einer jeweiligen Lithium-Ionen-Zelle, mindestens eine Einleseeinrichtung in operativer Verbindung mit der Zentralsteuereinrichtung und ausgebildet zum Einlesen von mindestens einem Betriebsparameter einer zugeordneten Lithium-Ionen-Zelle der nach galvanischen Prinzipien arbeitenden Einrichtung.

Erfindungsgemäß sind die Zentralsteuereinrichtung, die Programmspeichereinrichtung, die mindestens eine Datenspeichereinrichtung, die mindestens eine Sensorschnittstelleneinrichtung und die mindestens eine Einleseeinrichtung in einem integrierten Schaltkreis integriert. Die Integration der genannten Komponenten in einem integrierten elektrischen Schaltkreis bringt den Vorteil, dass die wesentlichen Elemente des Batteriemanagementsystems in einem Bauelement, insbesondere kompakt, zusammengefasst sind und das Batteriemanagementsystem technisch leicht in der Einrichtung integrierbar ist. Gemäß einem bevorzugten Ausführungsbeispiel der Erfindung ist es vorgesehen, dass die Zentralsteuereinrichtung (16), die mindestens eine Programmspeichereinrichtung (18), die mindestens eine Datenspeichereinrichtung (20) und die mindestens eine Sensorschnittstelleneinrichtung (22) in einer für herkömmliche integrierte Schaltkreise bekannten Halbleitertechnologie ausgeführt sind.

Vorzugsweise ist das Batteriemanagementsystem für den Einsatz in einem Kraftfahrzeug ausgebildet. Dadurch werden ein breites technisches Anwendungsgebiet und wirtschaftlich ein großer Absatzmarkt erschlossen.

Unter Lithium-Ionen-Akkumulator wird eine Einrichtung verstanden, in der Energie bzw. elektrische Ladung elektrochemisch in einer Elektrode gespeichert ist und die Ladung durch Bewegung zu einer komplementären Elektrode in der Form eines elektrischen Stroms über einen die beiden Elektroden verbindenden Stromkreis durch einen externen Verbraucher zur Versorgung des externen Verbrauchers mit elektrischer Energie zur Verfügung steht und die nach Abgabe eines wesentlichen Teils der darin gespeicherten Energie durch Beaufschlagen eines elektrischen Ladestroms wieder aufgeladen werden kann.

Unter einer Zentralsteuereinrichtung wird eine Einrichtung, wie insbesondere eine Steuereinheit, verstanden, die in der Lage ist, die Funktionen und bzw. Betriebsabläufe anderer Einrichtungen des Batteriemanagementsystems, wie das Abspeichern von überwachten Betriebsdaten als Funktion der Zeit, das Anwählen bzw. Auswählen (Multiplexen) von mehreren an das Batteriemanagementsystem angeschlossenen Akkumulatorzellen, das Einlesen von mittels Sensoren erfassten Betriebszustandsdaten, die Datenkommunikation mit anderen Steuersystemen, zu überwachen bzw. zu steuern. Die Zentralsteuereinrichtung kann insbesondere programmierbar sein.

Unter einer Datenspeichereinrichtung wird eine Einrichtung verstanden, die allgemein Daten, wie Betriebsdaten bzw. Zustandsdaten als Funktion der Zeit speichern und wieder auslesbar zur Verfügung stellen kann.

Unter einer Sensorschnittstelleneinrichtung wird eine Einrichtung verstanden, die geeignet ist zur Datenkommunikation, zumindest dem Einlesen in das Betriebsmanagementsystem von mittels in der Nähe der nach galvanischen Prinzipien arbeitenden Einrichtung angeordneten, ggf. außerhalb des integrierten Teils des Batteriemanagementsystems bereitgestellten Sensoren erfassten Messdaten, die vorzugsweise zur bidirektionalen Datenkommunikation zum Einlesen von Sensordaten und zum Ansteuern von, insbesondere auch "intelligenten" Sensoren.

Unter einer Einleseeinrichtung wird eine Einrichtung verstanden, die ein den Betriebszustand einer nach galvanischen Prinzipien arbeitenden Einrichtung beeinflussen kann, insbesondere auf einen oder mehrere gewünschte Werte einstellen kann. Dazu kann die Einleseeinrichtung von anderen Steuereinrichtungen des Batteriemanagementsystems, wie etwa der Zentralsteuereinheit bzw. einer gesondert bereitgestellten Ablaufsteuereinrichtung, angesteuert werden.

Unter einer einzustellenden Einrichtung wird eine Einrichtung verstanden, die mit einer Einleseeinrichtung des Batteriemanagementsystems operativ verbunden ist und von dieser in ihrem Betriebszustand geändert bzw. auf einen gewünschten Wert eingestellt werden kann, um mindestens einen Betriebsparameter einer nach galvanischen Prinzipien arbeitenden Einrichtung einzustellen. Ein einzustellende Einrichtung kann extern in Bezug auf das Batteriemanagementsystem sein.

In vorteilhafter Weise sind die Zentralsteuereinrichtung, die mindestens eine Programmspeichereinrichtung, die mindestens eine Datenspeichereinrichtung und die mindestens eine Sensorschnittstelleneinrichtung in einer für herkömmliche integrierte Schaltkreise bekannten Halbleitertechnologie ausgeführt. Dies hat den Vorteil, dass bekannte, insbesondere wirtschaftlich und technisch effiziente Technologien zum Entwerfen und Herstellen dieser Einrichtungen benutzt werden können. Insbesondere kann die Halbleitertechnologie eine 0,13 µm Technologie, insbesondere eine 0,13 µm BCD-Technologie sein. Die Anwendung einer neuartigen 0,13 µm Technologie ermöglicht eine derzeit technisch nahezu maximal hohe Integrationsdichte der Elemente bzw. Einrichtungen des Batteriemanagementsystems in dem integrierten Schaltkreis. Gemäß einem bevorzugten Ausführungsbeispiel der Erfindung ist es vorgesehen, dass die Halbleitertechnologie eine 0,13 µm BCT-Technologie ist.

BCD-Technologie (Englisch: Bipolar CMOS DMOS) ist eine im Stand der Technik für sogenannte "Smart Power ICs" bekannte Technologie. Die BCD-Technologie ist im Wesentlichen eine Kombination bestimmter Prozesse, einschließlich der gegenseitigen Isolationen der unterschiedlichen Bauelemente und Schaltungselemente auf einem Chip. Denn bei der Herstellung von Smart Power ICs wird allgemein eine Vielzahl unterschiedlicher Technologien eingesetzt, die sich im Durchführungsaufwand, im Repertoire der Bauelemente, in der Spannungsfestigkeit und den möglichen Schaltungstopologien unterscheiden. Das wichtigste Unterscheidungsmerkmal ist die Technologie, mit der die unterschiedlichen Bauelemente und Schaltungsteile aus einem Chip gegeneinander isoliert werden, wie etwa Selbstisolation, Isolation durch PN-Übergänge bzw. dielektrische Isolation. Insbesondere ist vorgesehen, eine neuartige 1,3 µm BCD-Technologie der neunten Generation zu verwenden. Damit ist es möglich, die vielfältigen erforderlichen Funktionen eines Batteriemanagementsystems auf einem einzigen integrierten Schaltkreis zu integrieren, nämlich:
1. Schaltungen mit analogen Signalen und gemischten analogen und digitalen Signalen, beispielsweise zur operativen Verwendung mit beliebigen verfügbaren Sensoreinrichtungen;
2. digitale Hochgeschwindigkeitslogik und Mikro-Prozessoren in kompakter 0,13 µm CMOS Technologie, insbesondere für die Zentralsteuereinrichtung
3. Datenspeichereinrichtungen, wie etwa Flash-Speicher, insbesondere eNVM, bzw. sogenannte Datenregistriereinrichtungen (Data Logger) einsetzbar sind;
4. Hochfrequenzelektronik bis 2,4 GHz und 10 GBit/s in der externen und internen Datenkommunikation; und
5. Leistungselektronik bis etwa 60 V und 4 A (Spitzen- bzw. Scheitelwert) zur Ansteuerung von Einleseeinrichtungen bzw. Stellelementen.

Damit kann ein bis vor der Entwicklung der vorliegenden Erfindung unerreichter Integrationsgrad eines komplexen Batteriemanagementsystems in einem einzigen integrierten elektrischen Schaltkreis bzw. auf einem einzelnen Chip, und damit ein technisch hoher Integrationsgrad erreicht werden.

Das System kann ferner mindestens eine, vorzugsweise in den integrierten Schaltkreis integrierte Treibereinrichtung zum Betreiben bzw. Ansteuern der mindestens einen Lithium-Ionen-Zelle aufweisen. Das Aufnehmen der Treibereinrichtung in das Batteriemanagementsystem vergrößert den Integrationsgrad und ermöglicht, dass eine Einleseeinrichtung in allen ihren Funktionen aus dem Batteriemanagementsystem angesteuert werden kann. Gemäß einem bevorzugten Ausführungsbeispiel der Erfindung ist es vorgesehen, dass das System (10) mindestens eine, vorzugsweise im integrierten Schaltkreis integrierte Treibereinrichtung zum Betreiben bzw. Ansteuern der mindestens einen Lithium-Ionen-Zelle aufweist.

Das Batteriemanagementsystem kann ferner eine, vorzugsweise in den integrierten Schaltkreis integrierte Ablaufsteuereinrichtung, insbesondere zum Ansteuern von einer oder mehreren Treibereinrichtungen zum Betreiben bzw. Ansteuern der mindestens einen Lithium-Ionen-Zelle, insbesondere zum Steuern von zeitlichen Abläufen nacheinander auszuführender Vorgänge bzw. Einflussnahmen auf die Betriebszustände von an das Batteriemanagementsystem angeschlossenen, nach galvanischen Prinzipien arbeitenden Einrichtungen, die über die Treibereinrichtungen die Betriebszustände der Zellen der nach galvanischen Prinzipien arbeitenden Einrichtungen überwachen bzw. steuern kann. Das Aufnehmen einer Ablaufsteuereinrichtung in das Batteriemanagementsystem vergrößert den Integrationsgrad und die Flexibilität bzw. die Einsatzmöglichkeiten des Systems noch weiter. Gemäß einem bevorzugten Ausführungsbeispiel der Erfindung ist es vorgesehen, dass das System ferner eine vorzugsweise im integrierten Schaltkreis integrierte Ablaufsteuereinrichtung insbesondere zum Ansteuern von einer oder mehreren Treibereinrichtungen zum Betreiben bzw. Ansteuern der mindestens einen Lithium-Ionen-Zelle umfasst.

Der integrierte Schaltkreis kann eine Architektur aufweisen, die in Abhängigkeit von einer Leistungsklasse, insbesondere einer Leistungsklasse der nach galvanischem Prinzip arbeitenden Einrichtung, skalierbar ist. Dadurch wird die Einsetzbarkeit des Batteriemanagementsystems für eine Verwendung mit nach galvanischen Prinzipien arbeitenden Einrichtungen auf ein weites Gebiet von Einsatzmöglichkeiten vergrößert. Gemäß einem bevorzugten Ausführungsbeispiel der Erfindung ist es vorgesehen, dass der integrierte Schaltkreis eine Architektur aufweist, die in Abhängigkeit von einer Leistungsklasse, insbesondere einer Leistungsklasse der nach galvanischem Prinzip arbeitenden Einrichtung skalierbar ist.

Der Schaltkreis kann eine Architektur aufweisen, die für eine kleinste Leistungsklasse bis zu einer höchsten Leistungsklasse skalierbar ist. Insbesondere kann die kleinste Leistungsklasse Leistungen im Bereich von etwa 1 W (Watt) bis 10 W umfassen. Die höchste Leistungsklasse kann Leistungen von nicht weniger als 50 kW (Kilowatt) umfassen. Die Skalierbarkeit des integrierten Schaltkreises für kleine bzw. niedrige bis zu hohen bzw. großen Leistungen vergrößert die Einsetzbarkeit des Batteriemanagementsystems für verschiedene Typen und Einsatzgebiete von nach galvanischem Prinzip arbeitenden Einrichtungen noch weiter. Gemäß einem bevorzugten Ausführungsbeispiel der Erfindung ist es vorgesehen, dass der Schaltkreis eine Architektur aufweist, die für eine kleinste Leistungsklasse bis zu einer höchsten Leistungsklasse skalierbar ist.
Gemäß einem weiteren bevorzugten Ausführungsbeispiel der Erfindung ist es vorgesehen, dass die kleinste Leistungsklasse Leistungen im Bereich von 1 W bis 10 W umfasst.
Gemäß einem weiteren bevorzugten Ausführungsbeispiel der Erfindung ist es vorgesehen, dass die höchste Leistungsklasse Leistungen von nicht weniger als 50 kW umfasst.

Die mindestens eine Treibereinrichtung kann als Leistungselektronikeinrichtung ausgeführt sein. Insbesondere kann die mindestens eine Treibereinrichtung als 45 V (Volt) bis 60 V Leistungselektronikeinrichtung ausgeführt sein. Dies ermöglicht ein zusammenwirken des Batteriemanagementsystems mit nach galvanischen Prinzipien arbeitenden Einrichtungen auch hoher Leistungsklassen bzw. das Ansteuern von einzustellenden Einrichtungen von sehr unterschiedlichen Arten, wie etwa Transformatoren, Lüftergebläse oder Kühlmittelumwälzpumpen für ein Thermomanagement der nach galvanischen Prinzipien arbeitenden Einrichtung. Gemäß einem bevorzugten Ausführungsbeispiel der Erfindung ist es vorgesehen, dass die mindestens eine Treibereinrichtung als Leistungselektronikeinrichtung, insbesondere als 45 V - 60 V Leistungselektronikeinrichtung, ausgeführt ist.

Die Zentralsteuereinrichtung kann eine Mikrosteuereinrichtung bzw. ein µ-Controller, insbesondere ein 16/32-Bit-Controller sein. Die Herstellungstechnologie für eine derartige Zentralsteuereinrichtung ist im Stand der Technik besonders gut, d.h. wirtschaftlich und technisch effizient, optimiert und ermöglicht ferner ein universelles Programmieren des Betriebs des Batteriemanagementsystems und dessen Zusammenwirken mit externen Einrichtungen, was die Einsatzmöglichkeiten des Batteriemanagementsystems noch weiter vergrößert. Gemäß einem bevorzugten Ausführungsbeispiel der Erfindung ist es vorgesehen, dass die Zentralsteuereinrichtung eine Mikro-Steuereinrichtung, insbesondere ein 16/32-Bit Controller, ist.

Der Schaltkreis kann ferner eine Systemschnittstelleneinrichtung zur digitalen Datenkommunikation mit der Außenwelt umfassen, insbesondere beispielsweise mit einer externen Kraftfahrzeug-Steuereinrichtung. Über die Systemschnittstelleneinrichtung kann beispielsweise eine aktualisierte Software zur Steuerung der Zentralsteuereinheit in den integrierten Schaltkreis, insbesondere in die Programmspeichereinrichtung übertragen und eingeschrieben werden. Eine aktualisierte Software kann das Batteriemanagementsystem für weitere Typen von nach galvanischen Prinzipien arbeitenden Einrichtungen verwendbar machen und damit die Einsatzmöglichkeiten des Batteriemanagementsystems noch universeller bzw. vielfältiger zu gestalten, oder allgemein die Steuer- und Betriebssoftware des Batteriemanagementsystems zu aktualisieren bzw. für neue Arten von Akkumulatoren anzupassen. Gemäß einem bevorzugten Ausführungsbeispiel der Erfindung ist es vorgesehen, dass das System ferner eine, vorzugsweise im integrierten Schaltkreis integrierte Systemschnittstelleneinrichtung zur digitalen Datenkommunikation mit der Außenwelt, beispielsweise mit einer externen Kraftfahrzeug-Steuereinrichtung, umfasst.

Die Systemschnittstelleneinrichtung kann in 0,13 µm BCD-Technologie ausgeführt sein, was die Integration im Schaltkreis erleichtert bzw. vereinfacht. Die Systemschnittstelleneinrichtung kann ausgebildet sein zur Datenkommunikation nach mindestens einem der Standards LIN, CAN oder Flexray. Damit sind die in der Automobilindustrie derzeitig gebräuchlichen Standards bedienbar und das Batteriemanagementsystem wird damit für einen großen Markt geeignet. Gemäß einem bevorzugten Ausführungsbeispiel der Erfindung ist es vorgesehen, dass die Systemschnittstelleneinrichtung in 0,13 µm BCD-Technologie ausgeführt ist. Gemäß einem weiteren bevorzugten Ausführungsbeispiel der Erfindung ist es vorgesehen, dass die Systemschnittstelleneinrichtung ausgebildet ist zur Datenkommunikation nach mindestens einem der Standards LIN, CAN oder Flexray.

Wenn das Batteriemanagementsystem insbesondere für kleine bzw. niedrige Leistungsklassen ausgebildet sein soll, kann die Ablaufsteuerung im Schaltkreis integriert sein, und insbesondere in 0,13 µm BCD-Technologie ausgeführt sein. Dies vergrößert den Integrationsgrad und vereinfacht die schaltungstechnische Integration der Ablaufsteuereinrichtung mit den übrigen Einrichtungen des Batteriemanagementsystems, insbesondere mit der Zentralsteuereinrichtung und der mindestens einen Einleseeinrichtung noch weiter. Gemäß einem bevorzugten Ausführungsbeispiel der Erfindung ist es vorgesehen, dass die Ablaufsteuereinrichtung im Schaltkreis integriert ist.
Gemäß einem weiteren bevorzugten Ausführungsbeispiel der Erfindung ist es vorgesehen, dass die Ablaufsteuereinrichtung in 0,13 µm BCD-Technologie ausgeführt ist.

Wenn das Batteriemanagementsystem für hohe bzw. höhere und höchste Leistungsklassen angepasst werden soll, kann die Ablaufsteuereinrichtung extern in Bezug auf den Schaltkreis bereitgestellt werden und insbesondere mit Leistungshalbleitern, insbesondere COOL-MOS oder IGBT (Englisch: Insulated Gate Bipolar Transistor)-Leistungshalbleitern ausgebildet sein. Dies ermöglicht, dass die in diesem Fall für die Ablaufsteuereinrichtung erforderlichen hohen Ströme beim Entwurf des integrierten Schaltkreises nicht berücksichtigt zu werden brauchen, und dennoch die Integration der so ausgebildeten Ablaufsteuerung in einem als ein einziges Einbauelement ausgeführten Batteriemanagementsystem zu ermöglichen. Gemäß einem bevorzugten Ausführungsbeispiel der Erfindung ist es vorgesehen, dass die Ablaufsteuereinrichtung extern in Bezug auf den Schaltkreis bereitgestellt ist.

Wenn das Batteriemanagementsystem für kleine bzw. niedrige Leistungsklassen angepasst werden soll, kann in vorteilhafter Weise mindestens eine Treibereinrichtung im Schaltkreis integriert sein, und insbesondere in 0,13 µm BCD-Technologie ausgeführt sein. Die Integration der Treibereinrichtung im Schaltkreis erhöht den Integrationsgrad und die Ausführung in 0,13 µm BCD-Technologie vereinfacht die schaltungstechnische Integration mit den übrigen Einrichtungen bzw. Komponenten in dem integrierten Schaltkreis. Gemäß einem bevorzugten Ausführungsbeispiel der Erfindung ist es vorgesehen, dass mindestens eine Treibereinrichtung in 0,13 µm BCD-Technologie ausgeführt ist.

Wenn das Batteriemanagementsystem für hohe und höchste Leistungsklassen angepasst werden soll, kann mindestens eine Treibereinrichtung extern in Bezug auf den Schaltkreis bereitgestellt sein und insbesondere mit Leistungshalbleitern, insbesondere COOL-MOS oder IGBT-Leistungshalbleitern, ausgebildet sein. Wie oben bereits für die Ablaufsteuereinrichtung für Fälle von hohen Leistungsklassen erwähnt ist, ermöglicht dies, dass die in der Treibereinrichtung erforderlichen hohen Ströme beim Entwurf des integrierten Schaltkreises nicht berücksichtigt werden müssen, und die Treibereinrichtung dennoch in einem als ein einziges Einbauelement ausgeführten Batteriemanagementsystem integriert sein können. Gemäß einem bevorzugten Ausführungsbeispiel der Erfindung ist es vorgesehen, dass die Ablaufsteuereinrichtung mit Leistungshalbleitern, insbesondere COOL-MOS oder IGBT Leistungshalbleitern, ausgebildet ist.
Gemäß einem weiteren bevorzugten Ausführungsbeispiel der Erfindung ist es vorgesehen, dass mindestens eine Treibereinrichtung extern in Bezug auf den Schaltkreis bereitgestellt ist.

Zum Anpassen des Batteriemanagementsystems für hohe und höchste Leistungsklassen kann in vorteilhafter Weise die Ablaufsteuerung und mindestens eine Treibereinrichtung extern in Bezug auf den Schaltkreis bereitgestellt sein und insbesondere als Leistungshalbleiter, beispielsweise COOL-MOS oder IGBT-Leistungshalbleiter, ausgeführt sein. Gemäß einem bevorzugten Ausführungsbeispiel der Erfindung ist es vorgesehen, dass mindestens eine Treibereinrichtung im Schaltkreis integriert ist.
Gemäß einem weiteren bevorzugten Ausführungsbeispiel der Erfindung ist es vorgesehen, dass mindestens eine Treibereinrichtung mit Leistungshalbleitern, insbesondere COOL-MOS oder IGBT Leistungshalbleitern, ausgebildet ist.
Gemäß einem weiteren bevorzugten Ausführungsbeispiel der Erfindung ist es vorgesehen, dass die Ablaufsteuereinrichtung und mindestens eine Treibereinrichtung extern in Bezug auf den Schaltkreis bereitgestellt sind.
Gemäß einem weiteren bevorzugten Ausführungsbeispiel der Erfindung ist es vorgesehen, dass die Ablaufsteuereinrichtung und mindestens eine Treibereinrichtung als Leistungshalbleiter, insbesondere COOL-MOS oder IGBT Leistungshalbleiter, ausgeführt ist.

Die Sensorschnittstelleneinrichtung kann zur Datenkommunikation mit einem oder mehreren Sensoreinrichtungen zum Messen von Funktionsparametern einer Zelle der nach galvanischen Prinzipien arbeitenden Einrichtung ausgebildet sein, wobei eine jeweilige Sensoreinrichtung aus der folgenden Gruppe ausgewählt ist: Sensor zum Messen von chemischen Parametern der nach galvanischen Prinzipien arbeitenden Einrichtung, wie beispielsweise der Elektrolytkonzentration, Sensor zum Messen einer Temperatur der nach galvanischen Prinzipien arbeitenden Einrichtung, Sensor zum Messen einer Zellenspannung, Sensor zum Messen eines Stroms, beispielsweise eines von einer Zelle der nach galvanischen Prinzipien arbeitenden Einrichtung abgegebenen Entladestroms oder eines aufgenommenen Ladestroms, Sensor zum Messen eines Innenwiderstands einer Zelle der nach galvanischen Prinzipien arbeitenden Einrichtung, Sensoren zum Messen einer frequenzabhängigen Impedanz einer Zelle der nach galvanischem Prinzip arbeitenden Einrichtung, oder Kombinationen daraus. Die Datenkommunikation mit einer derartigen Vielfalt unterschiedlicher Sensoren ermöglicht, den aktuellen Zustand einer jeweiligen Zelle der nach galvanischem Prinzip arbeitenden Einrichtung umfangreich und vollständig zu charakterisieren und ermöglicht damit den Betrieb der Einrichtung mit einem höchstmöglichen Wirkungsgrad, insbesondere das dem aktuellen Zustand der nach galvanischem Prinzip arbeitenden Einrichtung angepasste, optimale Laden und Entladen. Gemäß einem bevorzugten Ausführungsbeispiel der Erfindung ist es vorgesehen, dass die Sensorschnittstelleneinrichtung ausgebildet ist zur Datenkommunikation mit einer oder mehreren Sensoreinrichtungen zum Messen von Funktionsparametern einer Lithium-Ionen-Zelle, wobei eine jeweilige Sensoreinrichtung aus der folgenden Gruppe ausgewählt ist: Sensor zum Messen von chemischen Parametern einer Zelle der nach galvanischen Prinzipien arbeitenden Einrichtung, wie beispielsweise der Elektrolytkonzentrationsgrad, Sensor zum Messen einer Temperatur einer Zelle der nach galvanischen Prinzipien arbeitenden Einrichtung, Sensor zum Messen einer Zellenspannung, Sensoren zum Messen eines Stroms, beispielsweise eines von einer Zelle der nach galvanischen Prinzipien arbeitenden Einrichtung abgegebenen Entladestroms oder eines aufgenommenen Ladestroms, Sensor zum Messen eines Innenwiderstands einer Zelle der nach galvanischen Prinzipien arbeitenden Einrichtung, Sensor zum Messen einer frequenzabhängigen Impedanz einer Zelle der nach galvanischem Prinzip arbeitenden Einrichtung oder Kombinationen hieraus.

Das Batteriemanagementsystem kann dazu ausgebildet sein, eine oder mehrere Aufgaben zu erfüllen, die aus der folgenden Gruppe ausgewählt sind: Überwachen eines aktuellen Zustands einer Zelle einer nach galvanischen Prinzipien arbeitenden Einrichtung, wie beispielsweise den Ladezustand, die Kapazität, die Leistungsfähigkeit und die Restlebensdauer, eine Steuerung eines Ladestroms, insbesondere unter Berücksichtigung des Balancings (d.h. eine zellenspezifische Steuerung des Ladestroms in einer Gesamtheit von zu einem Akkumulator elektrisch, beispielsweise seriell bzw. parallel, miteinander verbundenen Zellen mit dem Ziel, einen gleichmäßigen Ladezustand der Zellen bim Laden, zu erhalten), eine Steuerung eines Entladestroms, insbesondere unter Berücksichtigung des Balancings, ein Schutz vor Überlast, ein Schutz vor Überladung, ein Schutz vor Tiefentladung, ein Schutz vor einer Temperaturüberschreitung, ein Schutz vor anderen unzulässigen Betriebszuständen, ein Temperaturmanagement, eine Schutzbeschaltung bei mechanischer Beschädigung für bzw. von jeweils mindestens einer Zelle oder allen Zellen der nach galvanischen Prinzipien arbeitenden Einrichtung, sowie ferner eine Optimierung eines Energieverbrauchs des von der nach galvanischen Prinzipien arbeitenden Einrichtung mit elektrischer Energie versorgten Systems und eine Energierückspeisung aus dem mit elektrischer Energie versorgten System in die nach galvanischen Prinzipien arbeitende Einrichtung, oder Kombinationen aus den vorgenannten Aufgaben. Die Fähigkeit, diese umfangreichen und vielfältigen Aufgaben zu erfüllen, machen das Batteriemanagementsystem besonders geeignet, die anspruchsvollen Anforderungen für den Einsatz in der Automobilindustrie zu erfüllen, wie etwa das sensorische Erkennen des Akkumulatorladungszustands, das gezielte Eingreifen in die Charakteristik des Akkumulators zur Regelung und Optimierung von Notfallschutzmassnahmen, eines Systemverbrauchs, einer Leistungsprognose, eines Thermomanagements und einer Batteriealterungserkennung. Gemäß einem bevorzugten Ausführungsbeispiel der Erfindung ist es vorgesehen, dass das System dazu ausgebildet ist, eine oder mehrere Aufgaben zu erfüllen, die aus der folgenden Gruppe ausgewählt sind: Überwachung eines aktuellen Zustands einer Zelle der nach galvanischen Prinzipien arbeitenden Einrichtung, wie beispielsweise den Ladezustand, sowie die Kapazität, die Leistungsfähigkeit, die Restlebensdauer, eine Steuerung eines Ladestroms, eine Steuerung eines Entladestroms, ein Schutz vor Überlast, ein Schutz vor Überladung, ein Schutz vor Tiefenentladung, ein Schutz vor einer Temperaturüberschreitung, ein Schutz vor anderen unzulässigen Betriebszuständen, ein Temperaturmanagement, eine Schutzbeschaltung bei mechanischer Beschädigung für/von jeweils mindestens einer Zelle oder allen Zellen der nach galvanischen Prinzipien arbeitenden Einrichtung, sowie ferner eine Optimierung eines Energieverbrauchs des von der nach galvanischen Prinzipien arbeitenden Einrichtung mit elektrischer Energie versorgten Systems und eine Energierückspeisung aus dem von der nach galvanischen Prinzipien arbeitenden Einrichtung mit elektrischer Energie versorgten System in die nach galvanischen Prinzipien arbeitenden Einrichtung oder Kombinationen aus den vorgenannten Aufgaben.

Die Datenspeichereinrichtung kann als Flash-Speicher zur schnellen Aufnahme von großen Datenmengen oder als eine Datenregistriereinrichtung bzw. ein Data Logger ausgebildet sein. So kann die Betriebs- und Zustandshistorie der nach galvanischem Prinzip arbeitenden Einrichtung erfasst, gespeichert und zur Auswertung verfügbar gemacht werden, beispielsweise um Vorhersagen für zukünftige Betriebs- und Leistungszustände der nach galvanischem Prinzip arbeitenden Einrichtung abzuleiten. Gemäß einem bevorzugten Ausführungsbeispiel der Erfindung ist es vorgesehen, dass die Datenspeichereinrichtung als Flash-Speicher oder als eine Datenregistriereinrichtung bzw. Data Logger ausgebildet ist.
Gemäß einem weiteren bevorzugten Ausführungsbeispiel der Erfindung ist es vorgesehen, dass die Datenspeichereinrichtung zur Speicherung eines Lebenszeitprofils von mindestens einer Zelle der nach galvanischen Prinzipien arbeitenden Einrichtung ausgebildet ist.

Das Batteriemanagementsystem kann ausgebildet sein zum Aktualisieren der in der Programmspeichereinrichtung hinterlegten Programmsteuerung, beispielsweise zum Anpassen an eine neue Akkumulatortechnologie bzw. an einen neuen Softwareaktualisierungsstand. Dazu kann auch die komplette Ablaufsteuerung des Batteriemanagements in Software realisiert werden und damit aktualisierbar ausgestaltet sein. Dies vergrößert die Einsatzmöglichkeiten des Batteriemanagementsystems bzw. dessen Zusammenwirken mit vielfältigen, verschiedenen Akkumulatortypen noch weiter. Gemäß einem bevorzugten Ausführungsbeispiel der Erfindung ist es vorgesehen, dass das System ausgebildet ist zum Aktualisieren der in der Programmspeichereinrichtung hinterlegten Programmsteuerung, beispielsweise zum Anpassen an eine neue Akkumulatortechnologie bzw. einen neuen Softwareaktualisierungsstand.

Um die vorgenannten Vorteile technisch noch einfacher zu erzielen, kann die Systemschnittstelleneinrichtung insbesondere zum Empfangen von Softwareaktualisierungen der in der Programmspeichereinrichtung hinterlegten Programmsteuerung und zum Weiterleiten der Softwareaktualisierungen an die Programmspeichereinrichtung ausgebildet sein. Gemäß einem bevorzugten Ausführungsbeispiel der Erfindung ist es vorgesehen, dass die Systemschnittstelleneinrichtung zum Empfangen von Softwareaktualisierungen der in der Programmspeichereinrichtung hinterlegten Programmsteuerung und zum Weiterleiten der Softwareaktualisierungen an die Programmspeichereinrichtung ausgebildet ist.

Der integrierte Schaltkreis kann in einem Gehäuse aufgenommen sein, welches robust bezüglich äußerer mechanischer Einflüsse ist, und damit auch für die verschiedenen, in der Automobilindustrie erforderlichen Einsatzbedingungen geeignet gestaltet werden. Gemäß einem bevorzugten Ausführungsbeispiel der Erfindung ist es vorgesehen, dass der integrierte Schaltkreis in einem Gehäuse aufgenommen ist, welches robust bezüglich äußerer mechanischer Einflüsse ist.

Zum Erzielen des selben Vorteils und um zu ermöglichen, dass das Batteriemanagementsystem mit vielfältigen verschiedenen Arten von elektronischen Schaltungen zusammenzuwirken in der Lage ist, ohne in seinem internen Betrieb beeinflusst oder gestört zu werden, kann der integrierte Schaltkreis bzw. das gesamte Batteriemanagementsystem robust gegenüber von außen einwirkenden elektromagnetischen Störfeldern, insbesondere gegenüber einem EMV (elektromotorische Spannung)-Einfluss ausgebildet sein. Gemäß einem bevorzugten Ausführungsbeispiel der Erfindung ist es vorgesehen, dass der integrierte Schaltkreis bzw. das gesamte System robust gegenüber von außen einwirkenden elektromagnetischen Störfeldern, insbesondere gegenüber einem EMV Einfluss, ausgebildet ist.

Weitere Vorteile, Merkmale und Anwendungsmöglichkeiten der vorliegenden Erfindung ergeben sich aus der nachfolgenden Beschreibung von beispielhaften, die Erfindung nicht beschränkenden Ausführungsformen im Zusammenhang mit den Figuren. Es zeigt:
- Fig. 1: ein schematisches Schaltbild eines integrierten Batteriemanagementsystems in einer ersten Ausführungsform der Erfindung;
- Fig. 2: ein schematisches Schaltbild eines integrierten Batteriemanagementsystems in einer zweiten Ausführungsform der vorliegenden Erfindung.

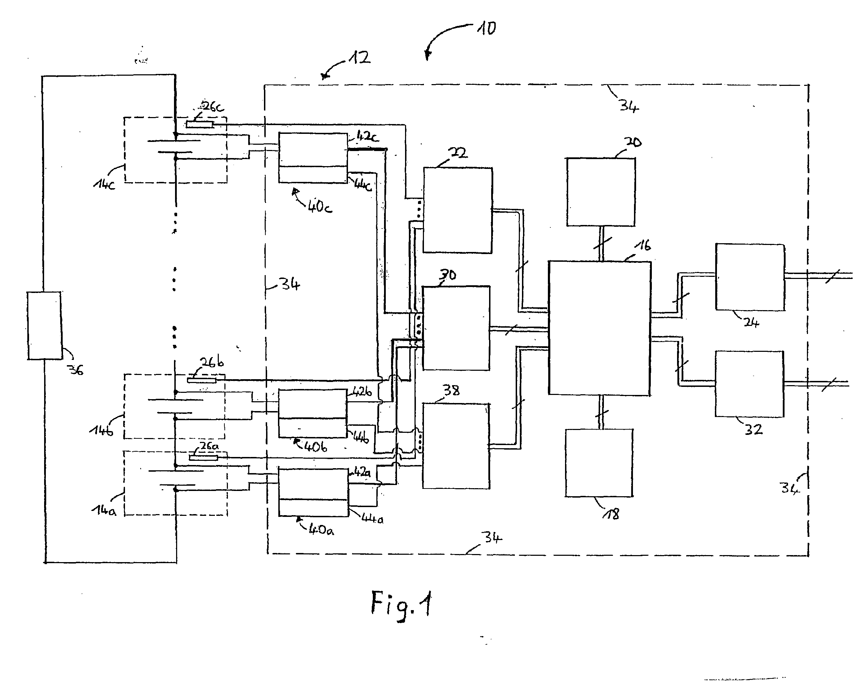

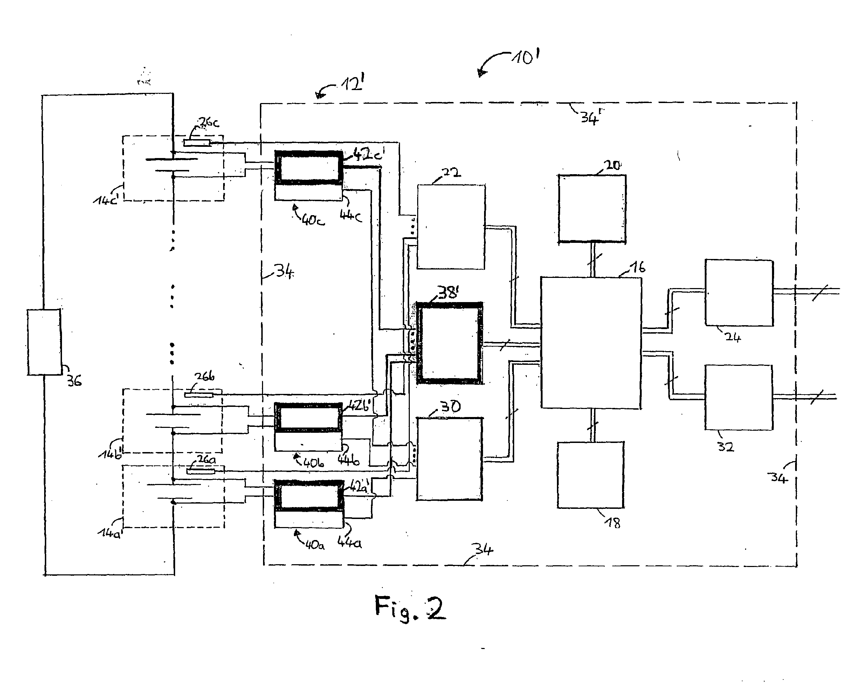

In den in den Figuren 1 und 2 gezeigten Ausführungsformen dient das Batteriemanagementsystem 10 zum Überwachen und Steuern einer Vielzahl von Lithium-Ionen-Zellen 14a, 14b, 14c, ... Die miteinander verschalteten Lithium-Ionen-Zellen 14a, 14b, 14c, ... bilden zusammen einen Lithium-Ionen-Akkumulator 14, der zum Versorgen mit elektrischer Energie eines mit dieser Energie zu versorgenden Systems 36, beispielsweise die Stromverbraucher eines Kraftfahrzeugs, ausgebildet ist.

Fig. 1 zeigt schematisch ein Batteriemanagementsystem 10, das als zentrales Element einen integrierten Schaltkreis 12 umfasst, in dem unter anderem die folgenden Einrichtungen integriert sind: eine Zentralsteuereinrichtung 16, eine Programmspeichereinrichtung 18 in operativer Verbindung mit der Zentralsteuereinrichtung 16, eine Datenspeichereinrichtung 20 in operativer Verbindung mit der Zentralsteuereinrichtung 16, eine Sensorschnittstelleneinrichtung 22 zum Einlesen bzw. Überwachen von Funktionsparametern von mindestens einer nach galvanischen Prinzipien arbeitenden Einrichtung 14, die mit der Zentralsteuereinrichtung 16 operativ verbunden ist und die zum operativen Verbinden mit mindestens einer externen Sensoreinrichtung 26a, 26b, 26c zum Messen des mindestens einen Funktionsparameters ausgebildet ist, eine Vielzahl von Ansteuervorrichtungen 40a, 40b, 40c, die jeweils ausgebildet sind zum Ansteuern einer nach galvanischen Prinzipien arbeitenden Einrichtung, im Ausführungsbeispiel ein Lithium-Ionen-Akkumulator 14 mit einer Serienschaltung mehrerer Lithium-Ionen-Zellen 14a, 14b, 14c,.... Zum Anpassen an einen vorgegebenen Spannungs- bzw. Strombedarfs des mit elektrischer Energie zu versorgenden Systems 36 können die Lithium-Ionen-Zellen 14a, 14b, 14c,... des Lithium-Ionen-Akkumulators auch in einer Parallelschaltung oder einer gemischten Schaltung mit zu Teilgruppen seriell verschalteten Zellen und parallel verschalteten Teilgruppen verschaltet sein.

Eine jegliche Ansteuervorrichtung 40a, 40b, 40c, ... ist einer Lithium-Ionen-Akkumulatorzelle 14a, 14b, 14c zugeordnet und umfasst jeweils eine Treibereinrichtung 42a, 42b, 42c, ... und eine Einleseeinrichtung 44a, 44b, 44c,... , beispielsweise in der Form eines Transistors (nicht gezeogt), mit einem Analog-/Digital-Wandler (nicht gezeigt), der ein für den aktuellen Betriebszustand der zugeordneten Zelle 14a, 14b, 14c,... repräsentatives, analoges Strom- bzw. Spannungssignal in ein digitales Signal umwandelt und an eine Signaleinleseeinrichtung, wie insbesondere einen Multiplexer 30, weiterleitet.

An dem integrierten Schaltkreis 12 des Batteriemanagementsystems sind über die Sensorschnittstelleneinrichtung 22 eine Vielzahl von Sensoren 26a, 26b, 26c,... zum Überwachen des aktuellen Zustands des Lithium-Ionen-Akkumulators 14 bzw. der einzelnen Zellen 14a, 14b, 14c, ... des Lithium-Ionen-Akkumulators 14 angeschlossen. Jeder Lithium-Ionen-Akkumulatorzelle 14a, 14b, 14c, ... ist mindestens ein Sensor 26a, 26b, 26c, ... zugeordnet. Jeder Akkumulatorzelle können auch mehrere unterschiedliche Sensoren zum Erfassen unterschiedlicher Betriebsparameter oder Eigenschaften der Zelle zugeordnet sein.

Um den Lithium-Ionen-Akkumulator 14 mit einem höchstmöglichen Wirkungsgrad zu laden und zu entladen, ist eine Vielzahl unterschiedlicher Sensoren bereitgestellt, die den aktuellen Zustand jeder Zelle in Bezug auf die Kapazität und den Ladezustand im Akkumulatorsystem 14 erfassen können und in Abhängigkeit vom Akkumulatortyp ausgewählt sind, um insbesondere folgende Akkumulatoreigenschaften zu messen: chemische Parameter, wie etwa den Konzentrationsgrad des Elektrolyten, die Temperatur einer Zelle, elektrische Parameter einer Zelle, wie etwa Spannung, Strom, Innenwiderstand bei kleiner bzw. großer Impulsbelastung und/oder die frequenzabhängige Impedanz einer Zelle. In den Figuren 1 und 2 ist zur Vereinfachung für eine jeweilige Lithium-Ionen-Zelle 14a, 14b, 14c, ... jeweils ein Sensor 26a, 26b, 26c, ... gezeigt. Eine jeweilige Zelle 14a, 14b, 14c, ... kann jedoch nicht nur einen, sondern auch zwei, drei, vier oder mehr unterschiedliche Sensoren zum Messen unterschiedlicher Akkumulatoreigenschaften zugeordnet und so in der Zelle angeordnet bzw. an der Zelle befestigt bzw. mit der Zelle verbunden, dass die genannten Akkumulatoreigenschaften gemessen werden.

Die von den Sensoren einschließlich der Sensoren 26a, 26b, 26c, ..., erfassten, den Akkumulatorzellenparametern zugeordneten elektrischen Signale werden über die Sensorschnittstellenrichtung 22 an die Zentralsteuereinrichtung 16 übertragen und von dieser systematisch geordnet und insbesondere pro Parameter bzw. Signal in eine chronologische Reihenfolge gebracht und über die Zentralsteuereinrichtung 16 zu der Datenspeichereinrichtung 20 weitergeleitet, wo sie registriert bzw. gespeichert werden und für eine spätere Auswertung zur Verfügung stehen und beispielsweise von der Zentralsteuereinrichtung 16 wieder ausgelesen werden können. Die Datenspeichereinrichtung 20 umfasst dazu einen schnell ansteuerbaren, sogenannten Flash-Speicher bzw. eine Datenregistriereinrichtung (Data Logger). Auf diese Weise wird in der Datenspeichereinrichtung 20 ein sogenanntes Lebenszeitprofil, das heißt die chronologischen Abfolgen aller erfassten, den Betriebszustand bzw. Zustand einer jeden Akkumulatorzelle charakterisierenden Parameter zu speichern und zur Auswertung, zum Ableiten der optimalen Steuerung von Entlade- und Ladeströmen und zum Vorhersagen zukünftiger Betriebszustände verfügbar zu haben.

Auf der Grundlage der in der Datenspeichereinrichtung 20 gespeicherten Daten ist das Batteriemanagementsystem 10 in der Lage, den angeschlossenen Lithium-Ionen-Akkumulator 14 und, wie nach der vorliegenden Erfindung auch vorgesehen, jede einzelne Zelle 14a, 14b, 14c, ... des Akkumulators 14 mit höchstem Wirkungsgrad zu betreiben und die Lebensdauer zu maximieren.

Zum Beeinflussen des Betriebszustands, einschließlich des Steuerns der Ladeströme bzw. der Entladeströme der Zellen 14a, 14b, 14c weist das Batteriemanagementsystem 10 folgende Elemente auf: eine Vielzahl von Ansteuervorrichtungen 40a, 40b, 40c, ... zum Betreiben bzw. Ansteuern einer jeweiligen Lithium-Ionen-Zelle 14a, 14b, 14c... und eine Ablaufsteuereinrichtung 38, die über eine entsprechende, für bi-direktionale Signalübertragung ausgelegte Steuerleitung mit der Zentralsteuereinheit 16 operativ verbunden ist und zum Ansteuern über die Ansteuervorrichtung 40a, 40b, 40c,... des Betriebszustands einer jeglichen Akkumulatorzelle 14a, 14b, 14c, ... bereitgestellt ist. Dabei sind die Ansteuervorrichtungen 40a, 40b, 40c, ... jeweils einer Zelle 14a, 14b, 14c, ... zugeordnet und über entsprechende Paare von Leistungsleitungen mit einer jeweiligen Zelle verbunden.

Zum Betreiben bzw. Steuern einer jeweiligen Lithium-Ionen-Zelle 14a, 14b, 14c, ... umfasst eine jeweilige Ansteuervorrichtung 40a, 40b, 40c, ... eine Treibereinrichtung 42a, 42b, 42c und eine Einleseeinrichtung 44a, 44b, 44c mit einem Analog-/Digital-Wandler (nicht gezeigt). Eine jeweilige Treibereinrichtung 42a, 42b, 42c, ... empfängt von der Ablaufsteuereinrichtung 38 einen entsprechenden Steuerstrom, über den die Treibereinrichtung 42a, 42b, 42c eine jeweilige, darin enthaltene, insbesondere als Transistor ausgebildete Einleseeinrichtung (nicht gezeigt), die den Sollstrom für eine jeweilige Zelle 14a, 14b, 14c, ... einstellt, ansteuert.

Umgekehrt kann eine jeweilige Einleseeinrichtung 44a, 44b, 44c, ... auch einen Lade- bzw. einen Entladestrom der jeweiligen Zelle 14a, 14b, 14c bzw. über eine jeweilige Treibereinrichtung 42a, 42b, 42c, ... ein für einen jeweiligen Lade- bzw. Entladestrom repräsentatives Signal aufnehmen und einem jeweiligen in der Einlesevorrichtung enthaltenen Analog/Digital-Wandler (nicht gezeigt) zuführen. Ein jeweiliger Analog/Digital-Wandler wandelt den Strom (je nach Betriebszustand der Zelle 14a, 14b, 14c... den Entlade- oder Ladestrom) bzw. das repräsentative Signal in ein entsprechendes digitales Signal um. Das digitale Signal wird über eine entsprechende Leitung dem Multiplexer 30 zugeführt, der aus der Vielzahl der an ihm angeschlossenen Einleseeinrichtungen 44a, 44b, 44c, ... von der Zentralsteuereinrichtung 16 angesteuert eine der Einleseeinrichtungen auswählen und das von der Einleseeinrichtung 44a, 44b, 44c, ... erzeugte Signal der Zentralsteuereinrichtung 16 zuführen. Die auf diese Weise der Zentralsteuereinrichtung 16 zugeführten, für einen Betriebsparameter der Zellen 14a, 14b, 14c repräsentativen Werte bzw. Signale werden in der Datenspeichereinrichtung 20 in chronologischer Abfolge und nach Signalarten sortiert, und als Bestandteil des Lebenszeitprofils einer jeweiligen der Zellen 14a, 14b, 14c bzw. des Akkumulators 14 gespeichert.

In der Programmspeichereinrichtung 18 sind Unterprogramme bzw. Module gespeichert, die zur Ausführung in die Zentralsteuereinrichtung 16 geladen werden können. So kann jeder gewünschte und durch die Vielzahl der Sensoren messbare Parameter einer jeweiligen Zelle 14a, 14b, 14c des Akkumulators 14 ausgelesen, erfasst und zur Steuerung des Betriebszustands einer jeweiligen Zelle 14a, 14b, 14c... verwendet werden. Die Ablaufsteuereinrichtung 38 steuert dazu über eine jeweilige Treibereinrichtung 42a, 42b, 42c, ... die zeitliche Abfolge und die Stärke der Beeinflussungen der der Betriebszustände der jeweiligen Zelle 14a, 14b, 14c....

Der integrierte Schaltkreis 12 des Batteriemanagementsystems umfasst ferner eine Systemschnittstelleneinrichtung 24 zur digitalen Datenkommunikation mit externen Steuersystemen oder Steuergeräten. Zur universellen Einsetzbarkeit des Batteriemanagementsystems 10, insbesondere in unterschiedlichen Kraftfahrzeug-Steuerungstypen, ist die Systemschnittstelleneinrichtung 24 in der Lage, mehrere, insbesondere die im Stand der Technik gängigen Schnittstellen- und Kommunikationsstandards zu erfüllen, einschließlich der in der Automobilindustrie gängigen LIN-, CAN- und Flexrail-Standards.

Ferner umfasst der integrierte Schaltkreis 12 eine weitere Schnittstelle 32, die insbesondere als Master-Slave-Schnittstelle ausgebildet ist, zum operativen Verbinden des Batteriemanagementsystems 10 mit anderen Batteriemanagementsystemen und zum Einlesen von Software-Aktualisierungen in die Zentralsteuereinrichtung 16 und die Programmspeichereinrichtung 18. Die Schnittstelle 32 ermöglicht, dass mehrere an einem jeweiligen Batteriemanagementsystem angeschlossene Akkumulatoren in Reihe oder parallel miteinander verschaltet werden können und dass die jeweiligen, den Akkumulatoren zugeordneten Batteriemanagementsysteme (entsprechend der Verschaltung der Akkumulatoren in Reihe oder parallel zueinender) operativ so verbunden werden können, dass die Vielzahl der Batteriemanagementsysteme der einzelnen Lithium-Ionen-Akkumulatoren sich nach außen, insbesondere zu dem oben genannten, externen Steuersystem oder Steuergerät, wie ein einziges, virtuell integrales Batteriemanagementsystem verhält und angesehen (betrieben bzw. angesteuert) werden kann.

Durch geeignete Programmierung bzw. Bereitstellung entsprechender Unterprogramme in der Programmspeichereinrichtung 18 ist das Batteriemanagementsystem 10 in der Lage, insbesondere die folgenden Aufgaben im Rahmen der Überwachung und Steuerung der Zellen 14a, 14b, 14c... des Akkumulators 14 zu erfüllen:
- Überwachung des momentanen Zellenzustands (Ladezustand, Kapazität, Leistungsfähigkeit, Restlebensdauer) einer jeweiligen Zelle 14a, 14b, 14c...,
- optimale Steuerung des Ladevorgangs einer jeweiligen Zelle 14a, 14b, 14c... unter Berücksichtigung des Balancings,
- optimale Steuerung des Entladevorgangs einer jeweiligen Zelle 14a, 14b, 14c... unter Berücksichtigung des Balancings,
- Schutzbeschaltung vor Überlast und unzulässigen Betriebszuständen einer jeweiligen Zelle 14a, 14b, 14c...,
- Temperaturmanagement einer jeweiligen Zelle 14a, 14b, 14c...,
- kontrollierte Schutzbeschaltung bei elektrischer oder mechanischer Beschädigung des Akkumulatorsystems 14 von außen,
- Speicherung des Lebenszeitprofils des Akkumulators 14 einschließlich des Lebenszeitprofils einer jeweiligen Zelle 14a, 14b, 14c... in der Datenregistriereinrichtung (Datenspeichereinrichtung) 20,
- Optimierung des Verbrauchs des von dem Lithium-Ionen-Akkumulator 14 versorgten Systems 36 mit einer Leistungsprognose des Akkumulators 14,
- digitale Datenkommunikation des Batteriemanagementsystems 10 mit externen Steuersystemen oder Steuergeräten.

Die der vorliegenden Erfindung zugrundeliegende Aufgabe bzw. Herausforderung besteht darin, die verschiedenen elektronischen Funktionsblöcke, die gruppenweise in verschiedenen elektrischen Spannungs-, Strom- und Leistungsklassen bzw. -Regimes arbeiten, in einem einzigen integrierten Schaltkreis bzw. auf einem einzigen Chip zu integrieren. Die bezüglich der elektronische Beschaltung bzw. des Spannungs-, Strom- und Leistungsregimes unterschiedlichen Gruppen umfassen folgende Schaltungsarten:
1. Schaltungen mit gemischten analogen und digitalen Signalen zum Ansteuern und Auslesen der verschiedenartigen Sensoren, wie insbesondere in der Sensorschnittstelleneinrichtung 22 bzw. in der Sensoreinrichtung verwendet,
2. digitale Hochgeschwindigkeitslogik, wie beispielsweise in der Zentralsteuereinrichtung 16, der Systemschnittstelleneinrichtung 24, der Schnittstelle 32 und dem Multiplexer 30, die in hoch integrierter kompakter Halbleitertechnologie, insbesondere 0,13 µm CMOS Technologie auf dem Chip ausgebildet sind, verwendet,
3. schneller Flash-Speicher (eNVM) -DataLogger, wie in der Datenspeichereinrichtung 20 verwendet,
4. Hochfrequenzelektronik bis zu 2,4 GHz und 10 GBit/s für die externe und interne digitale Datenkommunikation, wie in der Systemschnittstelleneinrichtung 24, der Sensorschnittstelleneinrichtung 22 bzw. der Schnittstelle 32 verwendet, und
5. Leistungselektronik bis zu 60V und 4 A (Scheitel- bzw. Spitzenwert), wie z.B. in der Ablaufsteuerung 38 bzw. der Treibereinrichtung 42a, 42b, 42c,... verwendet.

In den beiden in den Figuren 1 und 2 gezeigten Ausführungsformen sind zumindest die Zentralsteuereinheit 16, die Programmspeichereinrichtung 18, die Datenspeichereinrichtung 20, die Sensorschnittstelleneinrichtung 22, die Systemschnittstelleneinrichtung 24, die Schnittstelle 32, der Multiplexer 30 und der Spannungsregler 28 zusammen in einem hoch integrierten Bereich des integrierten Schaltkreises 12 bzw. 12', und mithin in einem Gehäuse 34 bzw. 34' zusammengefasst. Damit wird ein bisher unerreichter System-on-Chip Integrationsgrad erreicht.

Die in den Figuren 1 und 2 gezeigten Ausführungsformen sind funktionell und was die Bestückung mit Elementen bzw. funktionellen Elektronikschaltungen betrifft, vergleichbar ausgestattet. Sie unterscheiden sich lediglich in der Systemarchitektur. Die Systemarchitektur ist an die Leistungsklasse des Lithium-Ionen-Akkumulators 14, mit dem das Batteriemanagementsystem 10 betrieben werden soll, angepasst. Die Architektur des Batteriemanagementsystems nach der Erfindung ist von dem hierin als kleine Leistungsklasse bezeichneten Leistungsbereich (1 W (Watt) bis 10 W) bis zu dem hierin als höchste Leistungsklasse bezeichneten Leistungsbereich von größer als 50 kW (Kilowatt) skalierbar.

Für kleine Leistungsklassen und insbesondere die genannte kleinste Leistungsklasse sind alle Komponenten, d.h. auch inklusive der Leistungshalbleiter, vollständig in dem Schaltkreis 12 integriert. Das heißt die Zentralsteuereinrichtung 16, die Programmspeichereinrichtung 18, eine Spannungsregeleinrichtung 28, die Systemschnittstelleneinrichtung 24, die Schnittstelle 32, die Sensorschnittstelleneinrichtung 22, der Multiplexer 30, die Ablaufsteuerung 38, die Ansteuervorrichtungen 40a, 40b, 40c einschließlich der darin enthaltenen Treibereinrichtungen 42a, 42b, 42c,... und den Einleseeinrichtungen 44a, 44b, 44c mit jeweiligem Analog/Digital-Wandler (nicht gezeigt) sind alle vollständig in einem integrierten Schaltkreis 12 integriert, wie in Fig. 1 gezeigt. Die in Fig. 1 gezeigte Ausführungsform des Batteriemanagementsystems ist daher besonders für kleine einschließlich der kleinsten Leistungsklasse geeignet.

Fig. 2 zeigt ein Batteriemanagementsystem 10' in einer zweiten Ausführungsform der vorliegenden Erfindung. Das Batteriemanagementsystem 10' in der Fig. 2 ist für höhere Leistungsklassen, einschließlich der höchsten Leistungsklasse (> 50 kW), ausgebildet. In dieser zweiten Ausführungsform sind die in Fig. 2 fett umrahmt gezeigten Elektronikschaltungen, das heißt insbesondere die Ablaufsteuereinrichtung 38', die Treibereinrichtungen 42a', 42b', 42c' an die hohe Leistungsklasse angepasst und entsprechenden, mit größeren, extern Bezug auf den Schaltkreis 12' angeordneten Leistungshalbleiter, insbesondere als COOL-MOS oder IGBT-Leistungshalbleiter ausgeführt, und diese sind nicht in dem Gehäuse 34' des integrierten Schaltkreises 12', in dem die übrigen Elemente angeordnet sind, angeordnet. Die übrigen Elemente sind wohl in dem integrierten Schaltkreis 12' angeordnet: die Steuereinrichtung 16, die Programmspeichereinrichtung 18, die Datenspeichereinrichtung 20, die Sensorschnittstelleneinrichtung 22, die Systemschnittstelleneinrichtung 24, die Schnittstelle 32, der Multiplexer 30, der Spannungsregler 28, die Einleseeinrichtungen 44a', 44b', 44c' mit den jeweiligen die Analog-/Digital-Wandlern (nicht gezeigt).

In den beiden Ausführungsformen der Figuren 1 und 2 ist die komplette in der Programmspeichereinrichtung 18 gespeicherte Ablaufsteuerung für das Batterie- bzw. Akkumulatormanagement in Software realisiert und kann für die jeweilige Anwendung bzw. den jeweiligen Akkumulatortyp als Aktualisierung über die Schnittstelle 32 oder 24 von außen eingelesen und in die Zentralsteuereinrichtung 16 und die Programmspeichereinrichtung 18 übertragen werden. Damit kann das Batteriemanagementsystem 10, 10' nicht nur an einen verbesserten Softwarestand sondern auch an neue, verschiedene, z.B. auch zukünftige Batterie- bzw. Akkumulatortechnologien angepasst werden.

### Bezugszeichenliste

- 10, 10': Batteriemanagementsystem (für kleine bzw. hohe Leistungsklasse)
- 12, 12': integrierter Schaltkreis (für kleine bzw. hohe Leistungsklasse)
- 14, 14': Lithium-Ionen-Zelle (für kleine bzw. hohe Leistungsklasse)
- 14a, 14b, 14c,...: Lithium-Ionen-Zelle (kleine Leistungsklasse)
- 14a', 14b', 14c',...: Lithium-Ionen-Akkumulator (hohe Leistungsklasse)
- 16: Zentralsteuereinrichtung
- 18: Programmspeichereinrichtung
- 20: Datenspeichereinrichtung (integriert)
- 22: Sensorschnittstelleneinrichtung (integriert)
- 24: Systemschnittstelleneinrichtung
- 26a, 26b, 26c,...: Sensoreinrichtung
- 28: Spannungsregler (V+)
- 30: Multiplexer
- 32: Master-Slave Schnittstelle
- 34, 34': Gehäuse (für kleine bzw. hohe Leistungsklasse)
- 36, 36': versorgtes System (für kleine bzw. hohe Leistungsklasse
- 38: Ablaufsteuereinrichtung (intern angeordnet)
- 38': Ablaufsteuereinrichtung (extern angeordnet)
- 40a, 40b, 40c,...: Ansteuervorrichtung (kleine Leistungsklasse)
- 40a', 40b', 40c',...: Ansteuervorrichtung (hohe Leistungsklasse)
- 42a, 42b, 42c,...: Treibereinrichtung (intern angeordnet)
- 42a', 42b', 42c',...: Treibereinrichtung (extern angeordnet)
- 44a, 44b, 44c: Einleseeinrichtung (kleine Leistungsklasse)

## Patentansprüche

1. Batteriemanagementsystem (10) zum Überwachen und Steuern von mindestens einer nach galvanischen Prinzipien arbeitenden Einrichtung (14, 14'), insbesondere ein Lithium-Ionen-Akkumulator mit mindestens einer Lithium-Ionen Zelle (14a, 14b, 14c...; 14a', 14b', 14c'...), das System (10) umfassend:
eine Zentralsteuereinrichtung (16),
eine Programmspeichereinrichtung (18) in operativer Verbindung mit der Zentralsteuereinrichtung (16),
mindestens eine Datenspeichereinrichtung (20) in operativer Verbindung mit der Zentralsteuereinrichtung (16),
mindestens eine Sensorschnittstelleneinrichtung (22) operativ verbunden mit der Zentralsteuereinrichtung (16) zum Überwachen von Funktionsparametern von mindestens einer der Lithium-Ionen-Zellen (14a, 14b, 14c...; 14a', 14b', 14c'...) der nach galvanischen Prinzipien arbeitenden Einrichtung (14) und ausgebildet zum operativen Verbinden mit mindestens einer externen Sensoreinrichtung (26a, 26b, 26c,...) und
zum Messen von mindestens einem Funktionsparameter einer jeweiligen Lithium-Ionen-Zelle (14a, 14b, 14c...; 14a', 14b', 14c'...),
mindestens eine Einleseeinrichtung (44a, 44b, 44c...) in operativer Verbindung mit der Zentralsteuereinrichtung (16) und ausgebildet zum Einlesen von mindestens einem Betriebsparameter einer zugeordneten Lithium-Ionen-Zelle (14a, 14b, 14c... ; 14a', 14b', 14c'...) der nach galvanischen Prinzipien arbeitenden Einrichtung (14, 14'), **dadurch gekennzeichnet, dass** die Zentralsteuereinrichtung (16), die mindestens eine Programmspeichereinrichtung (18), die mindestens eine Datenspeichereinrichtung (20), die mindestens eine Sensorschnittstelleneinrichtung (22) und die mindestens eine Einleseeinrichtung (44a, 44b, 44c...) in einem integrierten Schaltkreis (12) integriert sind.

2. Batteriemanagementsystem nach Anspruch 1, **dadurch gekennzeichnet, dass** das System (10) mindestens eine, vorzugsweise im integrierten Schaltkreis (12) integrierte Treibereinrichtung (42a, 42b, 42c) zum Betreiben bzw. Ansteuern der mindestens einen Lithium-Ionen-Zelle (14a, 14b, 14c,...; 14a', 14b', 14c',...) aufweist.

3. Batteriemanagementsystem nach einem der vorhergehenden Ansprüche, **dadurch gekennzeichnet, dass** der integrierte Schaltkreis (12) eine Architektur aufweist, die in Abhängigkeit von einer Leistungsklasse, insbesondere einer Leistungsklasse der nach galvanischem Prinzip arbeitenden Einrichtung (14, 14'), skalierbar ist.

4. Batteriemanagementsystem nach Anspruch 3, **dadurch gekennzeichnet, dass** der Schaltkreis (12) eine Architektur aufweist, die für eine kleinste Leistungsklasse bis zu einer höchsten Leistungsklasse skalierbar ist.

5. Batteriemanagementsystem nach einem der vorhergehenden Ansprüche, **dadurch gekennzeichnet, dass** das System (10) ferner eine, vorzugsweise im integrierten Schaltkreis (12) integrierte Systemschnittstelleneinrichtung (24) zur digitalen Datenkommunikation mit der Außenwelt, beispielsweise mit einer externen Kraftfahrzeug-Steuereinrichtung, umfasst.

6. Batteriemanagementsystem, insbesondere nach einem der Ansprüche 2 oder 5, **dadurch gekennzeichnet, dass** eine Ablaufsteuereinrichtung (38) extern in Bezug auf den Schaltkreis (12) bereitgestellt ist.

7. Batteriemanagementsystem nach einem der vorhergehenden Ansprüche, **dadurch gekennzeichnet, dass** die Sensorschnittstelleneinrichtung (22) ausgebildet ist zur Datenkommunikation mit einer oder mehreren Sensoreinrichtungen (26a, 26b, 26c,...) zum Messen von Funktionsparametern einer Lithium-Ionen-Zelle (14a, 14b, 14c...; 14a', 14b', 14c',...), wobei eine jeweilige Sensoreinrichtung aus der folgenden Gruppe ausgewählt ist: Sensor zum Messen von chemischen Parametern einer Zelle der nach galvanischen Prinzipien arbeitenden Einrichtung (14, 14'), wie beispielsweise der E-lektrolytkonzentrationsgrad, Sensor zum Messen einer Temperatur einer Zelle der nach galvanischen Prinzipien arbeitenden Einrichtung (14, 14'), Sensor zum Messen einer Zellenspannung, Sensoren zum Messen eines Stroms, beispielsweise eines von einer Zelle der nach galvanischen Prinzipien arbeitenden Einrichtung (14, 14') abgegebenen Entladestroms oder eines aufgenommenen Ladestroms, Sensor zum Messen eines Innenwiderstands einer Zelle der nach galvanischen Prinzipien arbeitenden Einrichtung (14, 14'), Sensor zum Messen einer frequenzabhängigen Impedanz einer Zelle der nach galvanischem Prinzip arbeitenden Einrichtung (14, 14') oder Kombinationen hieraus.

8. Batteriemanagementsystem nach einem der vorhergehenden Ansprüche, **dadurch gekennzeichnet, dass** das System (10) dazu ausgebildet ist, eine oder mehrere Aufgaben zu erfüllen, die aus der folgenden Gruppe ausgewählt sind: Überwachung eines aktuellen Zustands einer Zelle (14a, 14b, 14c...; 14a', 14b', 14c',...) der nach galvanischen Prinzipien arbeitenden Einrichtung (14, 14'), wie beispielsweise den Ladezustand, sowie die Kapazität, die Leistungsfähigkeit, die Restlebensdauer, eine Steuerung eines Ladestroms, eine Steuerung eines Entladestroms, ein Schutz vor Überlast, ein Schutz vor Überladung, ein Schutz vor Tiefenentladung, ein Schutz vor einer Temperaturüberschreitung, ein Schutz vor anderen unzulässigen Betriebszuständen, ein Temperaturmanagement, eine Schutzbeschaltung bei mechanischer Beschädigung für/von jeweils mindestens einer Zelle (14a, 14b, 14c...; 14a', 14b', 14c',...) oder allen Zellen der nach galvanischen Prinzipien arbeitenden Einrichtung (14, 14'), sowie ferner eine Optimierung eines Energieverbrauchs des von der nach galvanischen Prinzipien arbeitenden Einrichtung (14, 14') mit elektrischer Energie versorgten Systems (36, 36') und eine Energierückspeisung aus dem von der nach galvanischen Prinzipien arbeitenden Einrichtung (14, 14') mit elektrischer Energie versorgten System (36, 36') in die nach galvanischen Prinzipien arbeitenden Einrichtung (14, 14') oder Kombinationen aus den vorgenannten Aufgaben.

9. Batteriemanagementsystem nach einem der vorhergehenden Ansprüche, **dadurch gekennzeichnet, dass** die Datenspeichereinrichtung (20) zur Speicherung eines Lebenszeitprofils von mindestens einer Zelle der nach galvanischen Prinzipien arbeitenden Einrichtung (14, 14') ausgebildet ist.

10. Batteriemanagementsystem nach einem der vorhergehenden Ansprüche, **dadurch gekennzeichnet, dass** das System (10) ausgebildet ist zum Aktualisieren der in der Programmspeichereinrichtung (18) hinterlegten Programmsteuerung, beispielsweise zum Anpassen an eine neue Akkumulatortechnologie bzw. einen neuen Softwareaktualisierungsstand.

11. Batteriemanagementsystem, insbesondere nach Anspruch 5 und/oder 9, **dadurch gekennzeichnet, dass** die Systemschnittstelleneinrichtung (24) zum Empfangen von Softwareaktualisierungen der in der Programmspeichereinrichtung (18) hinterlegten Programmsteuerung und zum Weiterleiten der Softwareaktualisierungen an die Programmspeichereinrichtung (18) ausgebildet ist.

12. Batteriemanagementsystem nach einem der vorhergehenden Ansprüche, **dadurch gekennzeichnet, dass** der integrierte Schaltkreis (12) in einem Gehäuse (34, 34') aufgenommen ist, welches robust bezüglich äußerer mechanischer Einflüsse ist.
